# DEMANDE DE BREVET EUROPEEN

(11) **EP 4 574 922 A1**
(43) Date de publication de la demande: **25.06.2025**
(21) Numéro de dépôt: 23219378.9
(22) Date de dépôt: 21.12.2023
(51) Int. Cl.: C09K 11/02, C08K 3/013, C08K 3/36, C09K 11/77

(54) **MATÉRIAU PHOTOLUMINESCENT DE COULEUR FONCÉE**

(71) Demandeur: The Swatch Group Research and Development Ltd, 2074 Marin (CH)
(72) Inventeur: FRANÇOIS, Nicolas, 2000 Neuchâtel (CH); TERES, Nathalie, 2014 Bôle (CH)
(74) Mandataire: ICB SA

(57) **Abrégé**

L'invention concerne un matériau photoluminescent comportant en poids une matrice polymérique dans un pourcentage compris entre 19,8% et 54,8%, un composé photoluminescent dans un pourcentage compris entre 45% et 80%, un premier système de colorants dans un pourcentage compris entre 0,2% et 5% et optionnellement une silice poreuse dans un pourcentage compris entre 0% et 1%, et un deuxième système de colorants et des additifs avec un pourcentage total pour le deuxième système de colorants et les additifs compris entre 0% et 15%, le premier système de colorants comportant un ou plusieurs colorants choisis parmi une trichromie de pigments formée de pigments verts, de pigments bleus et de pigments rouges, et un pigment synthétique noir.

L'invention concerne également l'article revêtu avec ce matériau photoluminescent ou réalisé en masse avec ledit matériau photoluminescent.

## Description

### Domaine technique de l'invention

L'invention concerne un matériau photoluminescent de couleur foncée avec une performance lumineuse optimisée.

### Arrière-plan technologique

On connaît les matériaux phosphorescents faits d'un mélange de matières transparentes ou translucides avec des pigments photoluminescents réalisés à partir d'oxydes minéraux dopés aux terres rares. On peut citer par exemple le mélange de borosilicates avec 50% d'aluminate de strontium dopés Europium, Dysprosium (Eu²⁺, Dy³⁺:SrAl₂O₄) ou le mélange de résines acryliques avec 50% d'aluminate de strontium dopés Europium, Dysprosium. La décroissance lumineuse de ces matériaux est d'abord exponentielle. Si on part d'une luminance de quelques dizaines de Cd/m² pour une matière mise dans l'obscurité après saturation en énergie lumineuse, la luminance au bout de 10 minutes dans l'obscurité sera inférieure à 1 Cd/m². La décroissance lumineuse tend ensuite lentement vers une asymptote à quelques mCd/m² expliquant que ces matériaux gardent une persistance lumineuse visible dans le noir jusqu'à 12 heures. La bonne lisibilité des instruments de plongée de manière passive fait appel à ces matériaux luminescents et les progrès en termes de performance lumineuse sont donc très attendus.

Pour des raisons esthétiques, ces matériaux photoluminescents peuvent être colorés à partir d'un système de coloration, mélange de pigments et d'additifs.

On réalise que les composés utilisés dans la matière photoluminescente, y compris les pigments colorants ont un effet d'extinction, dit quenching en anglais, des propriétés luminescentes, la luminance des matériaux phosphorescents étant le résultat d'une interaction physico-chimique entre les divers composés du matériau photoluminescent.

Une optimisation combinée de la coloration et des propriétés lumineuses n'est donc pas aisée. Pour les couleurs noires et, de manière générale les couleurs foncées, des essais ont été réalisés avec différents noirs de carbone. On observe que ces derniers absorbent trop dans le domaine d'absorption et d'émission du pigment phosphorescent et impactent dès lors la performance lumineuse du matériau. Un optimum est donc toujours à trouver entre la couleur et la photoluminescence.

### Résumé de l'invention

L'invention consiste en une nouvelle formulation permettant d'obtenir une belle couleur noire de jour et, de manière générale de belles couleurs foncées de jour, tout en ayant de bonnes propriétés luminescentes.

A cet effet, il est proposé d'ajouter dans la formulation soit un mélange de pigments qui est une trichromie de trois couleurs primaires qui sont le rouge, le vert et le bleu, soit un pigment synthétique noir type solvant noir 27 (C.I Solvent Black 27), type noir brillant BN (Brilliant Black BN) ou type noir de pérylène, soit une combinaison de la trichromie de pigments et du pigment synthétique noir. La formulation peut comporter une trichromie des trois couleurs primaires pour obtenir la couleur foncée avec ensuite la couleur qui est ajustée par ajout du pigment synthétique noir. En variante, la couleur pourrait être ajustée par un ajout en faible quantité de noir de carbone. Selon un autre mode de réalisation, la formulation comporte uniquement le pigment synthétique noir, éventuellement avec un peu de noir de carbone, pour obtenir la couleur noire avec une bonne intensité phosphorescente.

Optionnellement, le matériau photoluminescent comporte en outre de la silice poreuse dérivée d'algues qui permet d'augmenter les propriétés lumineuses. La silice poreuse provient de squelettes de diatomées. Il s'agit de microalgues qui sont des organismes unicellulaires à squelette de silice. En effet, selon les dernières recherches en biologie, la diatomée, algue monocellulaire qui compose le plancton, est constituée de nanocellules de silice très efficaces pour absorber la lumière du jour même dans les profondeurs sombres des océans afin de pouvoir effectuer leur photosynthèse de manière efficace. L'ajout d'un pourcentage limité de silice poreuse, avec des teneurs inférieures ou égales au pourcent en masse, dans la matière photoluminescente permet d'améliorer les propriétés de luminescence.

Plus précisément, l'invention se rapporte à un matériau photoluminescent comportant en poids une matrice polymérique dans un pourcentage compris entre 19,8% et 54,8%, un composé photoluminescent dans un pourcentage compris entre 45% et 80%, un premier système de colorants dans un pourcentage compris entre 0,2% et 5% et optionnellement une silice poreuse dans un pourcentage compris entre 0% et 1%, et un deuxième système de colorants et des additifs avec un pourcentage total pour le deuxième système de colorants et les additifs compris entre 0% et 15%, le premier système de colorants comportant un ou plusieurs colorants choisis parmi une trichromie de pigments formée de pigments verts, de pigments bleus et de pigments rouges, et un pigment synthétique noir.

L'invention se rapporte également à l'article qui est réalisé en masse avec ce matériau photoluminescent ou revêtu avec ce matériau photoluminescent.

### Description détaillée de l'invention

L'invention concerne un matériau photoluminescent de couleur foncée pouvant être utilisé pour réaliser en masse un article ou pour revêtir un article. L'article peut, à titre d'exemple, être un composant horloger. Il peut plus spécifiquement s'agir d'un composant d'habillage choisi parmi la liste non exhaustive comprenant une carrure, un fond, une lunette, une couronne, un poussoir, un maillon de bracelet, un bracelet, une boucle ardillon, un fermoir, un cadran, un rehaut, un disque de quantième, une aiguille et un index de cadran.

Le matériau photoluminescent comporte (est constitué de) une matrice polymérique, un composé photoluminescent, un premier système de colorants et optionnellement une silice poreuse, des additifs et un deuxième système de colorants.

Le premier système de colorants, objet plus spécifique de l'invention, comporte un ou plusieurs des colorants choisis parmi la trichromie formée de pigments primaires rouges, verts et bleus, et le pigment synthétique noir qui est préférentiellement du solvant noir 27, du noir de pérylène et/ou du noir brillant BN. Le premier système de colorants est présent dans un pourcentage en poids compris entre 0,2% et 5%, de préférence entre 0,3% et 4%, plus préférentiellement entre 0,4% et 2%.

A titre d'exemple, les pigments primaires rouges peuvent être de type carmin (pigment laque originaire de la cochenille), azoïque, quinacridone ou pérylène. Les pigments primaires verts peuvent être de type phtalocyanine ou de type naphtol et les pigments primaires bleus peuvent être de type anthraquinone, phtalocyanine ou pérylène. Le solvant noir 27 a pour formule C₁₇H₁₃N₃O₄Cr_{1/2}. Par exemple, il est de la marque Polysynthren^{®} Black H. Le noir brillant BN, aussi appelé noir PN (Black PN), est un colorant de la famille des azoïques et de formule C₂₈H₁₇N₅Na₄O₁₄S₄. Il peut, par exemple, être de la marque NOIR BRILLANT BN 80% E151 de Sensient Cosmetic Technologies. Il est également possible pour l'homme de métier d'utiliser le noir de perylène.

Selon une première variante, le premier système de colorants comporte (est constitué de) uniquement la trichromie de pigments. Pour cette variante, le pourcentage de la trichromie par rapport au poids total du matériau photoluminescent est compris entre 0.5% et 4%, de préférence entre 0.7% et 2%. Préférentiellement, les trois pigments sont présents dans un même pourcentage. Ainsi, par exemple, pour un ajout de 1,5% de la trichromie de pigments, chaque pigment est ajouté à hauteur de 0,5% par rapport au poids total. On pourrait sortir de cette proportion égale avec une proportion comprise entre 20% et 40% pour chaque pigment. Selon une deuxième variante, le premier système de colorants comporte (est constitué de), d'une part, la trichromie de pigments et, d'autre part, le pigment synthétique noir avec un pourcentage de la trichromie de pigments par rapport au poids total du matériau photoluminescent compris entre 0,2% et 3%, de préférence entre 0,4% et 1,5%, plus préférentiellement entre 0,4% et 1%, et un pourcentage total pour le pigment synthétique noir compris entre 0,01% et 1%, de préférence entre 0,02% et 0,5%, plus préférentiellement entre 0,02% et 0,2% par rapport au poids total du matériau photoluminescent. Selon une troisième variante, le premier système de colorants comporte uniquement le pigment synthétique noir avec un pourcentage total par rapport au poids total du matériau photoluminescent compris entre 0,2% et 2%, de préférence entre 0,3% et 1,5%, plus préférentiellement entre 0,3% et 1%.

La matrice polymérique est présente dans un pourcentage en poids compris entre 19,8% et 54,8%, de préférence entre 29,7% et 49,7%, plus préférentiellement entre 34,6% et 44,6%. On notera que la borne maximale pour la matrice polymérique est calculée pour un matériau photoluminescent sans silice poreuse, sans un deuxième système de colorants et sans additifs. En présence d'un de ces composés, la borne maximale sera réduite en conséquence pour ne pas dépasser un pourcentage de 100% pour l'ensemble des composés du matériau photoluminescent. Pour la matrice polymérique, il peut s'agir de tous les polymères transparents ou semi-transparents dans le visible. A titre d'exemple, il peut s'agir d'un ou plusieurs des polymères suivants : des résines de la famille des acryliques, de la famille des polyamides, de la famille des polyoléfines, de la famille des époxydes, de la famille des polyuréthanes, de la famille des élastomères fluorés et des silicones.

Le composé photoluminescent est présent dans un pourcentage en poids compris entre 45% et 80%, de préférence entre 50% et 70%, plus préférentiellement entre 55% et 65%. Le composé photoluminescent peut être formé d'un pigment ou d'un pigment encapsulé dans une coque transparente. Le pigment est de préférence un dérivé d'aluminate alcalino-terreux dopé aux terres rares. Plus spécifiquement, le pigment peut être de l'aluminate de strontium dopés Europium, Dysprosium avec la formule Sr(x)AI(y)O(z) : Eu²⁺,Dy³⁺. En particulier, il peut s'agir du Sr₄Al₁₄O₂₅ : Eu²⁺,Dy³⁺ ou encore du SrAl₂O₄ : Eu²⁺,Dy³⁺, éventuellement tous deux présents dans le composé photoluminescent. Avantageusement, les pigments peuvent présenter différentes granulométries pour permettre une répartition optimale dans le volume des pigments et éviter les espaces libres. La présence de différentes granulométries dans le volume permet également de cumuler des petites particules formant des pièges de faible profondeur en surface responsables d'une intensité lumineuse importante sur les temps courts avec des grosses particules formant des pièges plus profonds responsables de la rémanence lumineuse sur les temps longs. A titre d'exemple, les pigments peuvent présenter une première plage granulométrique centrée sur un diamètre D1 compris entre 500 nm et 10 µm, idéalement entre 500 nm et 5 µm, et une deuxième plage granulométrique centrée sur un diamètre D2 compris entre 10 µm et 500 µm, idéalement entre 10 µm et 20 µm, avec une mesure de la granulométrie réalisée par analyse granulométrique laser ISO 13320 :2020, éventuellement complétée par une analyse MEB d'imagerie par électrons secondaires. Il est à noter qu'il est possible de réaliser plus de deux fractions granulométriques par tamisage et de les combiner ensuite. Par exemple, il est possible d'avoir une première fraction entre 500 nm et 5 µm dans un pourcentage en poids de 20%, une deuxième fraction entre 5 µm et 20 µm dans un pourcentage en poids de 60% et une troisième fraction entre 20 µm et 50 µm dans un pourcentage en poids de 20%.

Les pigments peuvent éventuellement être encapsulés dans une coque transparente organique ou minérale. La coque organique peut typiquement être choisie parmi les polymères cités pour la matrice polymérique. Pour une coque minérale, il pourrait par exemple s'agir d'une coque en silice (SiO₂) obtenue par exemple via un procédé sol-gel. Toujours à titre d'exemple, on peut citer d'autres coques minérales telles que l'oxyde de zirconium (ZrO₂), l'oxyde d'aluminium (Al₂O₃), etc.

Le matériau photoluminescent comporte également optionnellement dans un pourcentage total en poids compris 0% et 15%, de préférence entre 0% et 5%, un deuxième système de colorants et des additifs. Avantageusement, il comporte entre 0,5% et 5% en poids du deuxième système de colorants et des additifs. Le deuxième système de colorants comporte préférentiellement des colorants organiques qui n'absorbent pas dans les plages de longueur d'onde d'émission du pigment photoluminescent. Il peut s'agir de pigments ou de colorants fluorescents dont l'absorption est plutôt dans les UVs et l'émission dans le spectre visible. Par exemple, il peut s'agir de pigments ou colorants fluorescents organiques comme ceux de la marque Radiant ou Aralon^{®}. Il peut également s'agir de pigments ou de colorants translucides absorbant peu dans les longueurs d'onde d'émission du pigment phosphorescent. Par exemple, il peut s'agir de pigments ou colorants translucides de la marque Clariant. Le deuxième système de colorants peut également comporter du noir de carbone pour ajuster la couleur foncée. Le pourcentage de noir de carbone est compris entre 0% et 1%, de préférence il est à maximum 0,5%, voire à maximum 0,3%. En présence de noir de carbone, la borne inférieure est à 0,01%. Ainsi, le pourcentage de noir de carbone est compris entre 0,01% et 1%, de préférence entre 0,01 % et 0,5%, plus préférentiellement entre 0,01% et 0,3%.

D'autres additifs tels que des pigments à effet métallisé et nacré, des additifs anti-UVs pour protéger la matrice polymérique, un dispersant tel que du silane pour faciliter la dispersion des additifs et une charge nanométrique de type silice pour adapter les paramètres de viscosité du mélange, etc. peuvent être ajoutés.

Optionnellement, le matériau photoluminescent peut comporter de la silice poreuse provenant de squelettes de diatomées. Typiquement, le diamètre moyen des pores peut être de l'ordre de 500 nm. Eventuellement, il pourrait s'agir d'une silice poreuse synthétique. Pour une silice synthétique, des pores ont typiquement un diamètre moyen compris entre 0,1 µm et 3 µm. La silice poreuse est présente dans un pourcentage en poids compris entre 0% et 1%, de préférence entre 0,01% et 1%, plus préférentiellement entre 0,07% et 0,3%, encore plus préférentiellement entre 0,09% et 0,2%.

Le procédé de fabrication d'un article réalisé en masse dans le matériau photoluminescent consiste à mélanger le ou les polymères destinés à former la matrice polymérique avec préférentiellement un dispersant. Ce premier mélange est réalisé avec les pigments photoluminescents éventuellement préalablement encapsulés. Ensuite, le premier système de colorants est ajouté à ce deuxième mélange avec également l'ajout éventuel du deuxième système de colorants, des additifs et de la silice poreuse. Les mélanges peuvent être réalisés soit partant de résines liquides avec un mélangeur type speed-mixer ou avec un mélangeur à pales. Le façonnage du mélange obtenu peut ensuite être réalisé par extrusion. Les mélanges peuvent également être réalisés dans une extrudeuse bi-vis ou dans un mélangeur haute vitesse pour la fabrication de mélange thermoplastique et la transformation en granulés, réutilisables pour le moulage par injection.

Le procédé de fabrication d'un article revêtu avec le matériau photoluminescent consiste à déposer un revêtement sur le substrat par des techniques telles que l'impression sérigraphie, la tampographie ou le sprayage.

Des essais pour fabriquer en masse des échantillons avec le matériau photoluminescent ont été réalisés en ajoutant à une résine époxy avec un taux de charge de 60% en poids de pigments photoluminescents d'Eu²⁺,Dy³⁺ :SrAl₂O₃, un système de colorants comprenant la trichromie de couleurs primaires et le solvant noir 27. Le pourcentage en poids des trois couleurs primaires était de 0,6% avec une même répartition pour chaque couleur et le pourcentage de solvant noir 27 était de 0.05% en poids. Des essais ont également été réalisés avec une même matière de base et comme système de colorants du solvant noir 27 à raison de 0,4% par rapport au poids total. Des essais ont également été réalisés avec une même matière de base et comme système de colorants la trichromie de couleurs primaires dans un pourcentage en poids par rapport au poids total de 1,5% avec un pourcentage de 0,5% pour chaque couleur.

Des essais ont également été réalisés avec en plus 0.2% de silice poreuse.

Les échantillons ont été observés sous cabine lumière D65. En parallèle, des essais comparatifs ont été réalisés avec différents pigments noirs qui sont le noir de carbone de différentes tailles granulométriques et de différentes structures, ou des minéraux tels que les oxydes de fer III (Fe₃O₄) avec une même matière de base.

Le façonnage de la matière a été réalisé par moulage par coulée sous vide.

Avec les oxydes minéraux, l'effet d'extinction de la matière luminescente se fait assez rapidement. Avec le noir de carbone, les couleurs sont bien foncées mais utilisé seul, la perte de luminance est trop importante. Les essais avec la trichromie seule, le solvant noir 27 seul et les deux combinés permettent d'avoir une couleur de jour satisfaisante ainsi que des performances lumineuses améliorées de 15%. Les essais avec la silice poreuse ont montré une augmentation des propriétés de luminescence de 20% après 10 minutes, les propriétés de luminescence étant mesurées selon la norme ISO 17514-2003.

## Revendications

1. Matériau photoluminescent comportant en poids une matrice polymérique dans un pourcentage compris entre 19,8% et 54,8%, un composé photoluminescent dans un pourcentage compris entre 45% et 80%, un premier système de colorants dans un pourcentage compris entre 0,2% et 5% et optionnellement une silice poreuse dans un pourcentage compris entre 0% et 1%, et un deuxième système de colorants et des additifs avec un pourcentage total pour le deuxième système de colorants et les additifs compris entre 0% et 15%, le premier système de colorants comportant un ou plusieurs colorants choisis parmi une trichromie de pigments formée de pigments verts, de pigments bleus et de pigments rouges, et un pigment synthétique noir.

2. Matériau photoluminescent selon la revendication 1, **caractérisé en ce que** le pigment synthétique noir est un solvant noir 27, un noir brillant BN, un noir de pérylène ou une combinaison des trois.

3. Matériau photoluminescent selon la revendication 1 ou 2, **caractérisé en ce que** la matrice polymérique est présente dans un pourcentage compris entre 29,7% et 49,7%, le composé photoluminescent dans un pourcentage compris entre 50% et 70%, et le premier système de colorants dans un pourcentage compris entre 0,3% et 4%.

4. Matériau photoluminescent selon l'une des revendications précédentes, **caractérisé en ce que** la matrice polymérique est présente dans un pourcentage compris entre 34,6% et 44,6%, le composé photoluminescent dans un pourcentage compris entre 55% et 65%, et le premier système de colorants dans un pourcentage compris entre 0,4% et 2%.

5. Matériau photoluminescent selon l'une des revendications précédentes, **caractérisé en ce que** le premier système de colorants est constitué de la trichromie de pigments avec un pourcentage en poids compris entre 0.5% et 4%, de préférence entre 0.7% et 2%.

6. Matériau photoluminescent selon l'une des revendications 1 à 4, **caractérisé en ce que** le premier système de colorants est constitué de la trichromie de pigments et du pigment synthétique noir avec un pourcentage de la trichromie de pigments compris entre 0,2% et 3%, de préférence entre 0,4% et 1,5%, plus préférentiellement entre 0,4% et 1% et un pourcentage du pigment synthétique noir compris entre 0,01% et 1%, de préférence entre 0,02% et 0,5%, plus préférentiellement entre 0,02% et 0,2% par rapport au poids total du matériau photoluminescent.

7. Matériau photoluminescent selon l'une des revendications précédentes, **caractérisé en ce que** la proportion respective de pigments verts, de pigments bleus et de pigments rouges est comprise entre 20% et 40% par rapport au poids total de la trichromie de pigments.

8. Matériau photoluminescent selon la revendication précédente, **caractérisé en ce que** les pigments verts, les pigments bleus et les pigments rouges sont présents dans une même proportion au sein de la trichromie de pigments.

9. Matériau photoluminescent selon l'une des revendications 1 à 4, **caractérisé en ce que** le premier système de colorants est constitué du pigment synthétique noir avec un pourcentage compris entre 0,2% et 2%, de préférence entre 0,3% et 1,5%, plus préférentiellement entre 0,3% et 1%.

10. Matériau photoluminescent selon l'une des revendications précédentes, **caractérisé en ce que** le deuxième système de colorants comporte du noir de carbone avec un pourcentage par rapport au poids total du matériau photoluminescent compris entre 0,01% et 1%, de préférence entre 0,01% et 0,5%, plus préférentiellement entre 0,01% et 0,3%.

11. Matériau photoluminescent selon l'une des revendications précédentes, **caractérisé en ce que** la silice poreuse est présente dans un pourcentage compris entre 0,01% et 1%, de préférence entre 0,07% et 0,3%, plus préférentiellement entre 0,09% et 0,2%.

12. Matériau photoluminescent selon l'une des revendications précédentes, **caractérisé en ce que** la silice poreuse est issue de squelettes de diatomées.

13. Matériau photoluminescent selon l'une des revendications précédentes, **caractérisé en ce que** le composé photoluminescent comporte un pigment qui est un dérivé d'aluminate alcalino-terreux dopé aux terres rares.

14. Matériau photoluminescent selon la revendication précédente, **caractérisé en ce que** le pigment est un dérivé d'aluminate alcalino-terreux dopé Europium, Dysprosium de formule Sr(x)AI(y)O(z) : Eu²⁺,Dy³⁺.

15. Matériau photoluminescent selon la revendication précédente, **caractérisé en ce que** le pigment est du Sr₄Al₁₄O₂₅ : Eu²⁺,Dy³⁺ et/ou du SrAl₂O₄ : Eu²⁺,Dy³.

16. Matériau photoluminescent selon l'une des revendications 13 à 15, **caractérisé en ce que** le composé photoluminescent est constitué dudit pigment encapsulé dans une coque transparente organique ou minérale.

17. Matériau photoluminescent selon l'une des revendications précédentes, **caractérisé en ce que** la matrice polymérique comporte une ou plusieurs des résines de la famille des acryliques, de la famille des polyamides, de la famille des polyoléfines, de la famille des époxydes, de la famille des polyuréthanes, de la famille des élastomères fluorés et des silicones.

18. Matériau photoluminescent selon la revendication 16, **caractérisé en ce que** la coque transparente organique comporte une ou plusieurs des résines de la famille des acryliques, de la famille des polyamides, de la famille des polyoléfines, de la famille des époxydes, de la famille des polyuréthanes, de la famille des élastomères fluorés et des silicones et **en ce que** la coque transparente minérale comporte de la silice.

19. Matériau photoluminescent selon l'une des revendications 13 à 18, **caractérisé en ce que** le composé photoluminescent comporte des pigments de différentes granulométries.

20. Matériau photoluminescent selon la revendication précédente, **caractérisé en ce que** les pigments présentent au moins une première plage granulométrique centrée sur un diamètre D1 compris entre 500 nm et 10 µm et une deuxième plage granulométrique centrée sur un diamètre D2 compris entre 10 µm et 500 µm.

21. Article réalisé dans ou revêtu avec ledit matériau photoluminescent selon l'une des revendications précédentes.

22. Article selon la revendication précédente, **caractérisé en ce qu'**il s'agit d'un composant horloger.
